(19) Europäisches Patentamt / European Patent Office / Office européen des brevets

(11) **EP 2 816 547 A1**

(12) **EUROPEAN PATENT APPLICATION**

(43) Date of publication:
**24.12.2014 Bulletin 2014/52**

(51) Int Cl.:
**G09G 3/36** (2006.01)   **H02M 1/34** (2007.01)
**H02M 3/335** (2006.01)

(21) Application number: **13172258.9**

(22) Date of filing: **17.06.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **ABB Research Ltd.**
**8050 Zürich (CH)**

(72) Inventors:
• **Park, Ki-Bum**
  **5405 Baden-Dättwil (CH)**

• **Canales, Francisco**
  **5405 Baden-Dättwil (CH)**
• **Pettersson, Sami**
  **5405 Baden-Dättwil (CH)**

(74) Representative: **Kolster Oy Ab**
**Iso Roobertinkatu 23**
**PO Box 148**
**00121 Helsinki (FI)**

(54) **Adaptive RCD snubber and method for switching converter**

(57)    The present disclosure discloses a method and an adaptive RCD snubber circuit for a switching converter comprising a series-connection of a main inductor and a main switching device. A voltage stress of the main switching device is sensed, and the sensed voltage stress is controlled to a reference level by controlling a snubber capacitor voltage, wherein the snubber capacitor voltage is controlled by adjusting the snubber resistance of the RCD snubber.

Figure 4

EP 2 816 547 A1

**Description**

FIELD OF THE INVENTION

The present invention relates to voltage stress suppression of semiconductor switches and particularly to RCD snubbers.

BACKGROUND INFORMATION

In order to guarantee a voltage stress margin of semiconductors, voltage snubbers are typically used to suppress an additional voltage stress induced by an inductive component, for example. An RCD snubber is a widely used snubber topology for suppressing the additional voltage stress due to its simple structure and high reliability. The basic operation of the RCD snubber relies on storing energy from the power converter into a capacitor and dissipating the energy through a resistor.

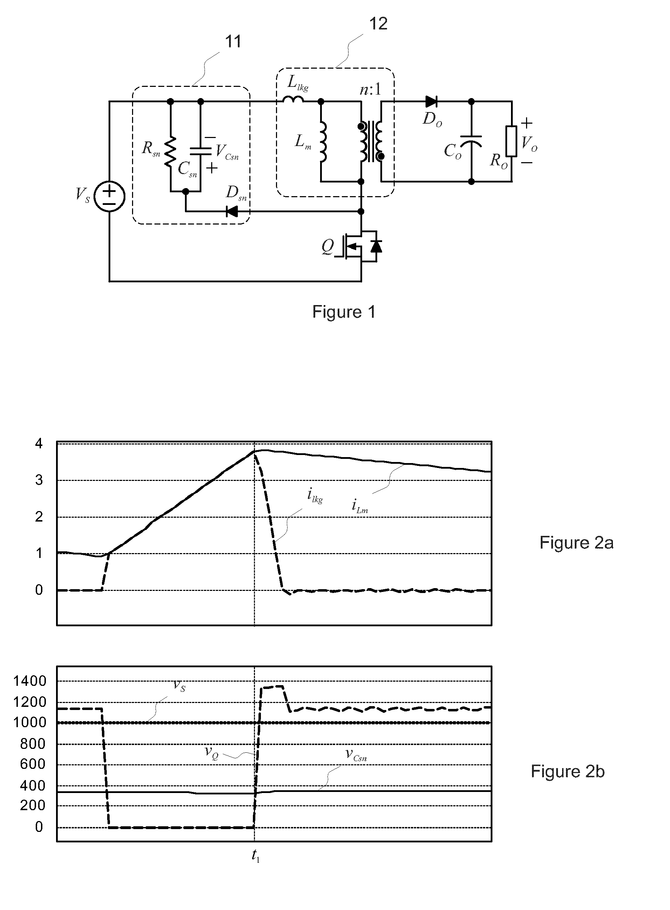

Figure 1 illustrates an example of a conventional RCD snubber 11 in a fly-back converter [1]. In Figure 1, the main transformer 12 is represented as an equivalent circuit comprising an ideal transformer coupled with a magnetising inductance $L_m$ and a leakage inductance $L_{lkg}$. The primary side of the transformer 12 is connected in series with the main switching device Q. The series-connection is supplied by a voltage supply $V_s$. On the secondary side of the transformer 12, an output capacitor $C_o$ is coupled with the secondary winding through an output diode $D_o$. A load connected to the flyback converter is represented by a resistance $R_o$. The conventional RCD snubber 11 in Figure 1 consists of a snubber diode $D_{sn}$, a snubber capacitor $C_{sn}$, and a snubber resistor $R_{sn}$.

Figures 2a and 2b illustrate exemplary waveforms of some voltages and currents of the switching converter of Figure 1. Figure 2a shows a current $I_{Lm}$ through the magnetising inductance $L_m$ and a current $I_{lkg}$ through the leakage inductance $L_{lkg}$. Figure 2b shows a voltage $v_{Csn}$ over the snubber capacitor $C_{sn}$, a voltage $v_Q$ over the switch Q, and the supply voltage $V_s$. At instant $t_1$, the switch Q is turned off and the voltage stress over it starts to rise. The leakage inductance increases the voltage stress. Therefore, the RCD snubber is used for clamping a voltage over the switch to a tolerable level. Figure 2b shows the voltage $v_Q$ over the switch Q being clamped at approximately 1350 V.

The RCD snubber is typically designed on the basis of the worst-case operating conditions, i.e. operating conditions causing the highest voltage stress on the semiconductor, and the tolerance of the parameters. Thus, the RCD snubber may cause large power losses even during normal operating conditions. If the normal operating conditions are very different than the worst-case operating conditions, the snubber power losses may be much higher than those of an RCD snubber optimised for normal operating conditions.

BRIEF DISCLOSURE

An object of the present invention is to provide a method and an apparatus for implementing the method so as to alleviate the above disadvantages. The objects of the invention are achieved by a method and an arrangement which are characterised by what is stated in the independent claims. The preferred embodiments of the invention are disclosed in the dependent claims.

The present disclosure presents an adaptive RCD (ARCD) snubber topology for a switching converter. In order to reduce the power loss and limit the voltage stress effectively, an ARCD snubber comprises a snubber resistance which can be adjusted on the basis of the operation point. For example, the snubber resistance may be formed a series connection of a resistor and a transistor controlling the current through the resistor. The transistor may be controlled on the basis of the voltage stress.

The disclosed ARCD snubber topology can provide some advantages over an conventional RCD snubber. In the disclosed ARCD topology, maximum switch voltage stress can effectively be limited by the control. This can lead to higher reliability. Since the maximum switch voltage stress can be limited effectively, an increased duty ratio of the switching converter may be used, which may results in further reduction in conduction losses. Further, as the snubber resistance is actively controlled, reduced snubber losses can be achieved at nominal operating conditions.

The disclosed ARCD snubber topology can be applied to various types of converter topologies and can easily be adapted with only a few additional components augmented from a conventional RCD snubber.

BRIEF DESCRIPTION OF THE DRAWINGS

In the following the invention will be described in greater detail by means of preferred embodiments with reference to the attached drawings, in which

Figure 1 illustrates an example of a conventional RCD snubber in a fly-back converter;

Figures 2a and 2b illustrate exemplary waveforms of some voltages and currents of the conventional switching converter of Figure 1;

Figure 3 illustrates a conceptual diagram of an adaptive RCD (ARCD) snubber circuit;

Figure 4 illustrates an example of the ARCD snubber concept in a flyback converter;

Figure 5 illustrates an exemplary embodiment of the ARCD snubber in a flyback-type switching converter;

Figures 6a to 6c show exemplary simulation waveforms for the conventional RCD snubber of Figure 1 at an input voltage of 1200 V;

Figures 7a to 7c show exemplary simulation waveforms for the conventional RCD snubber of Figure 1 at an input voltage of 1000 V;

Figures 8a to 8c show exemplary simulation waveforms for the disclosed ARCD snubber of Figure 1 at an input voltage of 1200 V; and

Figures 9a to 9c show exemplary simulation waveforms for the disclosed ARCD snubber of Figure 1 at an input voltage of 1000 V;

## DETAILED DISCLOSURE

In order to achieve a stable snubber capacitor voltage, the average power dissipated in the snubber capacitor should correspond with the average power flowing through the leakage inductance $L_{lkg}$ in Figure 1. Thus, the dissipated power $P_{sn}$ of the conventional RCD snubber in Figure 1 can be calculated as follows:

$$P_{sn} = \frac{V_{Csn}^{2}}{R_{sn}} = \frac{1}{2} F_{s} L_{lkg} I_{Q,\mathrm{peak}}^{2} \frac{V_{Csn}}{V_{Csn} - n V_{o}}, \tag{1}$$

where $V_{Csn}$ is the voltage over the snubber capacitor $C_{sn}$; $F_s$ is the switching frequency of the switching converter; $I_{Q,\mathrm{peak}}$ is the peak value of the current through the switching device $Q$; $n$ is the turns ratio of the transformer $T$; $V_o$ is the output voltage of the switching converter.

Equation 1 shows that if the snubber resistance $R_{sn}$ is reduced, the power loss $P_{sn}$ increases. At the same time, the voltage $v_{Csn}$ over the snubber capacitor inversely proportional to the power loss $P_{sn}$, i.e when the power loss $P_{sn}$ increases, the voltage stress decreases. Thus, both the power loss in the snubber and the voltage stress on the switch may have to be considered when selecting the snubber resistance $R_{sn}$. The capacitance of $C_{sn}$ can be determined by considering the voltage ripple $\Delta V_{Csn}$:

$$\Delta V_{Csn} = \frac{V_{Csn}}{C_{sn} R_{sn} F_{s}} \tag{2}$$

In some cases, such as in a case of a 3-phase auxiliary power supply (APS) application where the input voltage can reach up to 1200 V, the switch voltage stress margin may be narrow because of availability of suitable semiconductors [2]. In other words, the conventional RCD snubber of Figure 1 may have to be able to limit the additional voltage stress to a very low level. A smaller additional voltage stress causes higher snubber losses as presented in Equation 1. Consequently, the power loss in the snubber is inevitably large in the worst-case conditions. However, power loss may be high even at the nominal input voltage.

In order to reduce the power loss under normal operating conditions while still effectively limiting the voltage stress under the worst-case operating conditions, the present disclosure discloses an adaptive RCD (ARCD) snubber topology, in which the resistance of the RCD snubber is adjusted on the basis of the operation point.

The disclosed ARCD snubber topology can be applied to a switching converter comprising a series-connection of a main inductor and a main switching device and a RCD snubber circuit, for example. A voltage stress of the main switching device may be sensed, and the snubber resistance may be controlled on the basis of the sensed voltage stress. For example, the sensed voltage stress can be limited to a reference level by controlling the snubber capacitor voltage, where the snubber capacitor voltage can be controlled by adjusting the snubber resistance of the RCD snubber. The voltage stress may be represented by a sum of a voltage over the snubber capacitor and a voltage over the series-connection of the main inductor and the main switching device, for example.

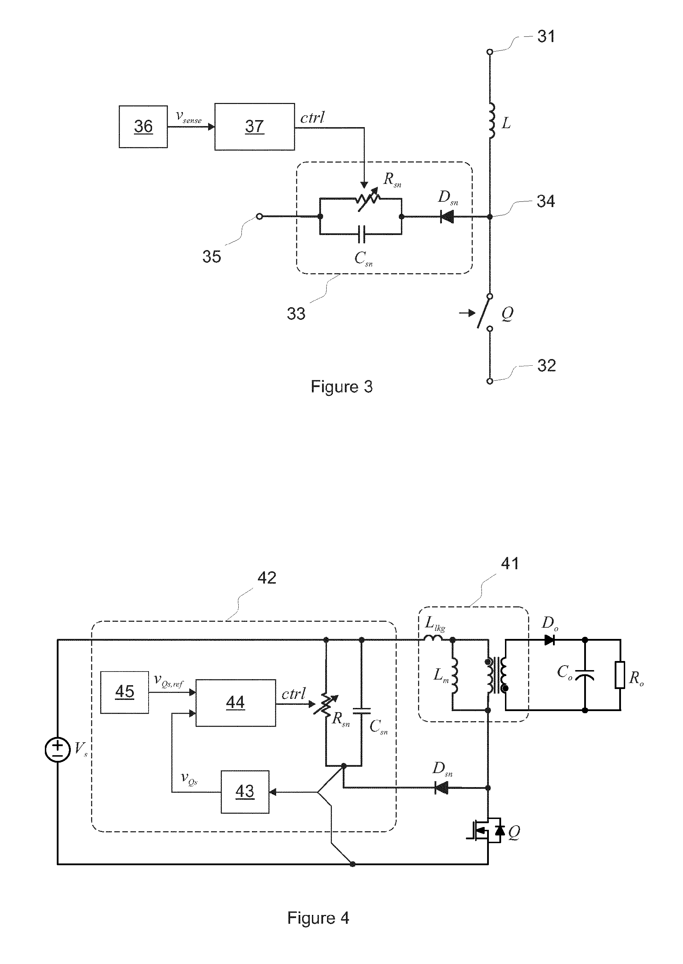

Figure 3 illustrates a conceptual diagram of an adaptive RCD snubber circuit according to the present disclosure. In Figure 3, a main inductor L and a main switching device $Q$ are connected in series between nodes 31 and 32 which may be supplied by an input supply voltage, for example. The adaptive RCD snubber 33 is connected from one end to a node 34 between the main inductor $L$ and the main switching device $Q$. The other end 35 of the adaptive RCD snubber 33 can be connected to the potential of either end of the series connection of the main inductor $L$ and the main switching device $Q$, i.e to the potential of node 31 or node 32, for example.

The adaptive RCD snubber circuit 33 comprises a snubber capacitor $C_{sn}$, a snubber diode $D_{sn}$, and a controllable snubber resistance $R_{sn}$. The adaptive RCD snubber further comprises means 36 for sensing the voltage stress $V_{sense}$ of the target component, i.e. the switching device $Q$ in Figure 3, and a controller 37 controlling the snubber resistance $R_{sn}$ to minimise the power loss and/or limit the maximum voltage stress of the target component. The controller 37 may be a voltage controller configured to control the sensed voltage stress to a reference level by controlling a snubber capacitor voltage $v_{Csn}$. The snubber capacitor voltage $v_{Csn}$ may be controlled by adjusting the controllable snubber resistance $R_{sn}$.

The disclosed ARCD snubber topology is applicable to various switching converter topologies. Figure 4 shows the example of the ARCD snubber concept in a flyback converter. The flyback converter comprises a series-connection of a main inductor and a main switching device $Q$. The main inductor is in the form of the primary side of a main transformer 41. The main transformer 41 is represented as an equivalent circuit comprising an ideal transformer coupled with a magnetising inductance $L_m$ and a leakage inductance $L_{lkg}$. The series-connection of the transformer 41 primary side and the main switching device $Q$ is supplied by a voltage supply $V_s$. On the secondary side of the transformer 41 in Figure 4, an output capacitor $C_o$ is coupled with the secondary winding through an output diode $D_o$. A load connected to the flyback converter is represented by a resistance $R_o$.

An adaptive RCD (ARCD) snubber circuit 42 is connected parallel to the transformer 41 primary side in Figure 4. The ARCD snubber circuit 42 comprises a snubber capacitor $C_{sn}$, a snubber diode $D_{sn}$, and a controllable snubber resistance $R_{sn}$.

The ARCD snubber 42 further comprises means 43 for sensing the voltage stress $v_{Qs}$ of the switching device $Q$. The voltage stress of a target component can be represented by a sum of a voltage over the series-connection and a voltage over the snubber capacitor, for example. In Figure 4, the sensed voltage stress is measured as a voltage over a path formed by the main switching device and the snubber diode.

A controller 44 in the ARCD snubber 42 controls the snubber resistance $R_{sn}$ in order to minimise the power losses and clamp the maximum voltage stress of the switching device $Q$. The controller 44 in Figure 4 is a snubber capacitor voltage controller configured to control the sensed voltage stress to a reference level $v_{Qs,ref}$ by controlling the snubber capacitor voltage $v_{Csn}$. In Figure 4, the reference level $v_{Qs,ref}$ represents a maximum allowable switch voltage and is supplied by a reference generator 45. The snubber capacitor voltage $v_{Csn}$ is controlled by adjusting the controllable snubber resistance $R_{sn}$.

Under normal operating conditions, the controllable snubber resistance $R_{sn}$ is set to the default resistance in order to minimise the power losses. The ARCD snubber senses the switch voltage stress. The ARCD snubber compares voltage stress $v_{Qs}$ with the given reference $v_{Qs,ref}$. If the switch voltage stress reaches the reference level $v_{Qs,ref}$, the ARCD snubber controls controllable snubber resistance $R_{sn}$ to limit the switch voltage stress within $v_{Qs,ref}$. In Figure 4, the sensed voltage stress is measured as a voltage $v_{Qs}$ over a path formed by the main switching device $Q$ and the snubber diode $D_{sn}$, i.e. the sum of the supply voltage $V_s$ and the snubber capacitor voltage $v_{Csn}$.

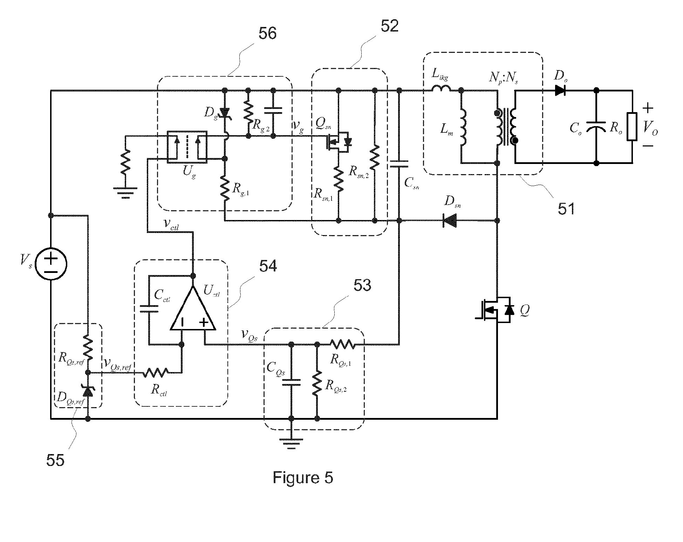

The controllable snubber resistance and the snubber voltage controller can be implemented in various ways. Figure 5 shows an exemplary embodiment of the ARCD snubber in a flyback-type switching converter.

In Figure 5, the flyback converter comprises a series-connection of the primary side of a transformer 51 and a main switching device $Q$. The transformer 51 is represented as an equivalent circuit comprising an ideal transformer coupled with a magnetising inductance $L_m$ and a leakage inductance $L_{lkg}$. The series-connection the primary side and the main switching device $Q$ is supplied by a voltage supply $V_s$. On the secondary side of the transformer 51 in Figure 5, an output capacitor $C_o$ is coupled with the secondary winding through an output diode $D_o$. A load connected to the flyback converter is represented by a resistance $R_o$.

In Figure 5, an adaptive RCD snubber circuit is connected parallel to the primary side of the transformer 51. The adaptive RCD snubber comprises a snubber capacitor $C_{sn}$, a snubber diode $D_{sn}$, and a controllable snubber resistance 52. The controllable snubber resistance 52 comprises a series connection of a snubber transistor $Q_{sn}$ and a first snubber resistor $R_{sn,1}$. The series connection is connected in parallel with a second snubber resistor $R_{sn,2}$. In Figure 5, the transistor $Q_{sn}$ is a MOSFET.

The adaptive RCD snubber in Figure 5 further comprises means 53 for sensing the voltage stress $v_{Qs}$ of the switching device $Q$. A voltage divider formed by resistors $R_{Qs,1}$ and $R_{Qs,2}$ is used to measure the voltage stress $v_{Qs}$ as a voltage over the main switching device $Q$ and the snubber diode $D_{sn}$. The voltage stress $v_{Qs}$ is filtered by a low-pass filter formed by a capacitor $C_{Qs}$ and the voltage divider.

A controller 54 in Figure 5 controls the snubber resistance $R_{sn}$ in order to clamp the maximum voltage stress of the switching device $Q$ to a tolerable level. The controller 54 in Figure 5 is a integrating controller configured to control the sensed voltage stress to a reference level $v_{Qs,ref}$ by controlling the snubber capacitor voltage $v_{Csn}$. The integrating controller is formed by an operational amplifier $U_{ctl}$, a capacitor $C_{ctl}$ and a resistor $R_{ctl}$.

In Figure 5, the controller 54 controls the snubber capacitor voltage $v_{Csn}$ by adjusting the controllable snubber resistance 52. The snubber transistor $Q_{sn}$ is configured to control current through the controllable snubber resistance 52 responsive to a control signal $v_{ctl}$ from the snubber capacitor voltage controller 54. The snubber transistor $Q_{sn}$ may operate in active region for linear regulation.

The reference level $v_{Qs,ref}$ represents a maximum allowable switch voltage. The reference level $v_{Qs,ref}$ can be generated by a reference voltage circuit as illustrated in Figure 5, for example. The reference voltage circuit 55 in Figure 5 comprises a series-connection of a resistor $R_{Qs,ref}$ and a zener-diode $D_{Qs,ref}$.

The controller 54 compares the sensed voltage stress $v_{Qs}$ with the given reference $v_{Qs,ref}$. Under normal operating conditions, the sensed voltage stress $v_{Qs}$ is below the reference level $v_{Qs,ref}$ and the controller 54 controls the snubber transistor to a non-conducting state. Thus, current flows through only the second snubber resistor $R_{sn,2}$.

However, if the switch voltage stress $v_{Qs}$ reaches the reference level $v_{Qs,ref}$, the controller 54 starts to control current through the controllable snubber resistance 52 by controlling the flow of current through the snubber transistor $Q_{sn}$. At the same time, the snubber diode $D_{sn}$ clamps the voltage over main switching device Q to the sum of the supply voltage $V_s$ and the snubber capacitor voltage $v_{Csn}$. Thus, the sum $V_s + v_{Csn}$, effectively determines the maximum voltage stress of the main switching device Q. By controlling the current through the controllable snubber resistance 52, the controller 54 is able to control the snubber capacitor voltage $v_{Csn}$, and therefore, the voltage stress over main switching device Q.

In the disclosed ARCD snubber topology, the second snubber resistor $R_{sn,2}$ can be dimensioned for the normal operating conditions instead of worst-case operating conditions. Thus power losses can be minimised under normal operating conditions.

Since the controller 54 and the snubber transistor $Q_{sn}$ are tied to different voltage potentials in Figure 5, the controller 54 cannot directly drive the snubber transistor $Q_{sn}$. Therefore, the ADRC snubber in Figure 5 also comprises a gate driver circuit 56.

The gate driver circuit 56 may comprise means for isolating the different potentials of the controller 54 and the snubber transistor $Q_{sn}$ from each other. An optocoupler $U_g$ is used to form a galvanic isolation separating the different potentials of the controller 54 and the snubber transistor $Q_{sn}$ in Figure 5. The primary side of the optocoupler $U_g$ is driven by the control signal $v_{ctl}$. The gate driver circuit 56 also comprises a series connection of a zener diode $Dg$ and a resistor $R_{g,1}$ forming a voltage source which supplies the secondary side of the the optocoupler $U_g$. The gate of the snubber transistor $Q_{sn}$ is connected to a series connection of the optocoupler $U_g$ secondary side and a resistor $R_{g,2}$ so that the gate-source voltage $v_g$ of the snubber transistor $Q_{sn}$ can be driven responsive to the control signal $v_{ctl}$.

Figure 5 illustrates only one simplified example of an implementation of the disclosed ARCD snubber topology. However, the disclosed ARCD snubber topology can also be implemented in various other ways, in various other switching converter topologies. For example, other types of transistor, such as BJT, can also be used for the snubber transistor.

Performance of the ARCD snubber was demonstrated by computer simulations. The conventional RCD in the flyback converter of Figure 1 and the disclosed ARCD snubber in the flyback converter of Figure 5 were simulated. Both snubbers were designed on the basis of same design specifications and simulation parameters. The input voltage $V_S$ of the flyback converter was specified to be in the range of 300 to 1200 V; the output voltage $V_O$ was 24 V; the output power $P_O$ was 260 W; the switching frequecy $F_S$ was 60 kHz. The turns ratio $Np : N_S$ of the main transformer was 17 : 3; the magnetising inductance $L_m$ was 1 mH; the leakage inductance $L_{lkg}$ was 20 $\mu$H. Maximum voltage stress on the main switch Q was specified to be 1500 V.

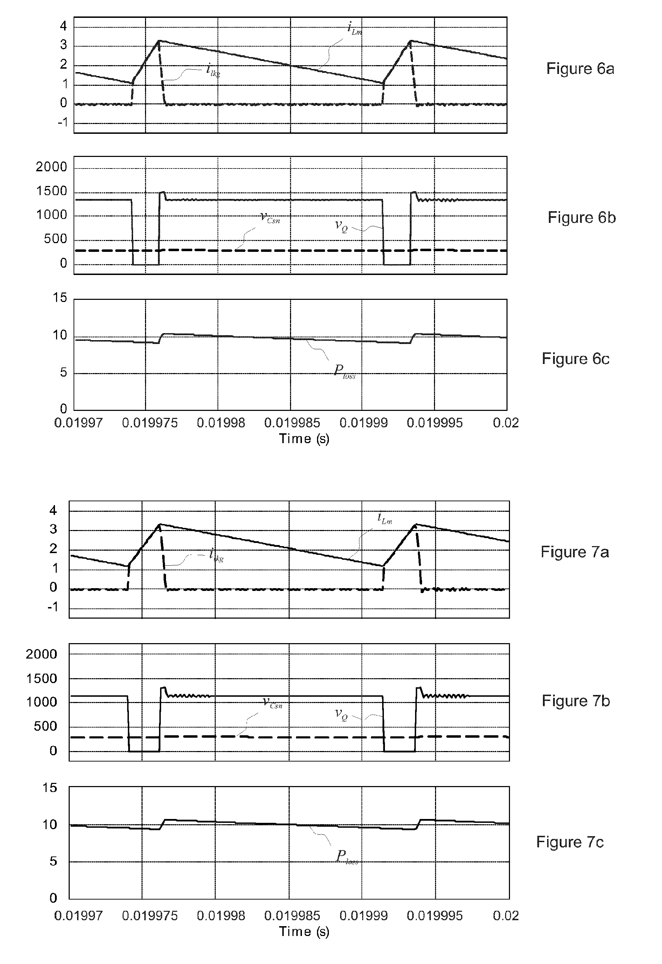

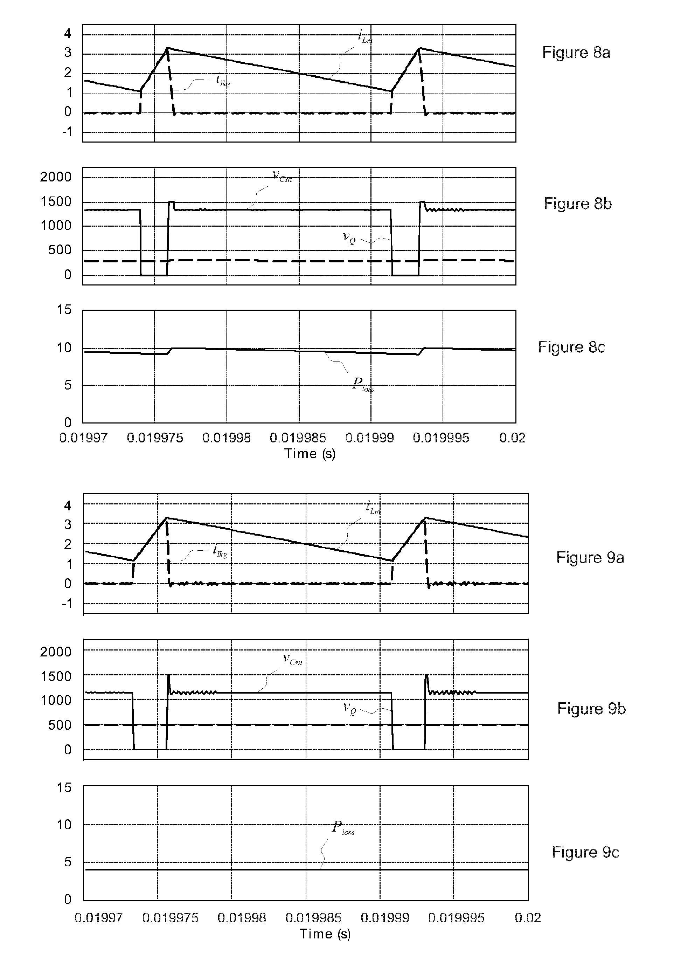

Figures 6a to 6c show exemplary simulated waveforms for the conventional RCD snubber of Figure 1 at the input voltage $V_S$ of 1200 V. Figure 6a shows a current $I_{Lm}$ through the the magnetising inductance $L_m$ and a current $I_{lkg}$ through the leakage inductance $L_{lkg}$; Figure 6b shows a voltage $v_Q$ over the switching device Q and a voltage $v_{Csn}$ over the snubber capacitor $C_{sn}$; Figure 6c shows the snubber power loss $P_{loss}$. Figures 7a to 7c show the same currents/voltages at the input voltage $V_S$ of 1000 V. In the same manner as Figures 6a to 6c, Figures 8a to 8c show exemplary simulation waveforms for the disclosed ARCD snubber of Figure 5 at the input voltage $V_S$ of 1200 V. Figures 9a to 9c show the same currents/voltages when the input voltage $V_S$ was 1000 V.

Both the conventional RCD and the disclosed ARCD snubbers were designed to guarantee a 1500-V switch voltage stress at $V_S$ = 1200 V. Therefore, both of the snubbers have the same power loss at this operating point, as shown in Figures 6c and 8c. However, the conventional RCD snubber still generated a large power loss even in the nominal operating conditions of $V_S$ = 600 V and 1000 V. In contrast, the ARCD snubber had a snubber power loss of only about 4 W and 4.5 W at these input voltages. Figures 7c and 9c show the difference at 1000 V.

Table 1. Comparison between RCD and ARCD snubber.

| Input voltage (V) | Snubber loss (W) | | Switch peak voltage (V) | |
|---|---|---|---|---|
| | RCD | ARCD | RCD | ARCD |
| 300 | 12.5 | 5.5 | 650 | 900 |
| 600 | 10.5 | 4.5 | 900 | 1120 |
| 1000 | 10 | 4 | 1300 | 1500 |
| 1200 | 9.5 | 9.5 | 1500 | 1500 |

It is obvious to a person skilled in the art that the inventive concept can be implemented in various ways. The invention and its embodiments are not limited to the examples described above but may vary within the scope of the claims.

REFERENCES

[1] H.-S. Choi, "AN4137 - Design guidelines for off-line flyback converters using Fairchild Power Switch (FPS)", Fairchild Semiconductor Cor., 2003.
[2] S. Buonomo, F. Saya, and G. Vitale, "AN1889 - STC03DE170 in 3-phase auxiliary power supply," STMicroelectronics, 2003.

**Claims**

1. An adaptive RCD snubber circuit for a switching converter comprising a series-connection of a main inductor and a main switching device, wherein the snubber circuit comprises
a snubber capacitor and a snubber diode,
a controllable snubber resistance,
means for sensing a voltage stress of the main switching device, wherein, and
a snubber capacitor voltage controller configured to control the sensed voltage stress to a reference level by controlling a snubber capacitor voltage, the snubber capacitor voltage being controlled by adjusting the controllable snubber resistance.

2. The adaptive RCD snubber circuit as claimed in claim 1, wherein the controllable snubber resistance comprises a transistor configured to control current through the controllable snubber resistance responsive to a control signal from the snubber capacitor voltage controller.

3. The adaptive RCD snubber circuit as claimed in claim 2, wherein the controllable snubber resistance comprises a series connection of the transistor and a first snubber resistor, wherein the series connection is connected in parallel with a second snubber resistor.

4. The adaptive RCD snubber circuit as claimed in any one of previous claims, wherein the voltage stress is represented by a sum of a voltage over the series-connection and a voltage over the snubber capacitor.

5. The adaptive RCD snubber circuit as claimed in claim 4, wherein the sensed voltage stress is measured as a voltage over a path formed by the main switching device and the snubber diode.

6. A switching converter comprising the adaptive RCD snubber circuit as claimed in any one of claims 1 to 5.

7. Method for a switching converter comprising a series-connection of a main inductor and a main switching device and a RCD snubber circuit, wherein the method comprises
sensing a voltage stress of the main switching device, and controlling the sensed voltage stress to a reference level by controlling a snubber capacitor voltage, wherein the snubber capacitor voltage is controlled by adjusting the snubber resistance of the RCD snubber.

Figure 1

Figure 2a

Figure 2b

Figure 3

Figure 4

Figure 5

Figure 6a

Figure 6b

Figure 6c

Figure 7a

Figure 7b

Figure 7c

Figure 8a

Figure 8b

Figure 8c

Figure 9a

Figure 9b

Figure 9c

Europäisches
Patentamt

European
Patent Office

Office européen
des brevets

# EUROPEAN SEARCH REPORT

Application Number

EP 13 17 2258

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 249 926 A2 (POWER INTEGRATIONS INC [US]) 16 October 2002 (2002-10-16) * the whole document * ----- | 1-7 | INV. G09G3/36 H02M1/34 H02M3/335 |
| X | WO 02/060066 A1 (ERICSSON TELEFON AB L M [SE]; ERIKSSON JONAS [SE]) 1 August 2002 (2002-08-01) * the whole document * ----- | 1-7 | |
| X | GB 2 324 661 A (ORIGIN ELECTRIC [JP]) 28 October 1998 (1998-10-28) * page 27, line 9 - page 28, line 20; figures 1,11B,11C * ----- | 1-7 | |
| | | | TECHNICAL FIELDS SEARCHED (IPC) G09G H02M |

The present search report has been drawn up for all claims

| Place of search | Date of completion of the search | Examiner |
|---|---|---|
| The Hague | 4 October 2013 | van Wesenbeeck, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................................

& : member of the same patent family, corresponding document

EPO FORM 1503 03.82 (P04C01)

**EP 2 816 547 A1**

## ANNEX TO THE EUROPEAN SEARCH REPORT
## ON EUROPEAN PATENT APPLICATION NO.

EP 13 17 2258

This annex lists the patent family members relating to the patent documents cited in the above-mentioned European search report.
The members are as contained in the European Patent Office EDP file on
The European Patent Office is in no way liable for these particulars which are merely given for the purpose of information.

04-10-2013

| Patent document cited in search report | | Publication date | Patent family member(s) | | Publication date |
|---|---|---|---|---|---|
| EP 1249926 | A2 | 16-10-2002 | EP | 1249926 A2 | 16-10-2002 |
| | | | EP | 1995859 A2 | 26-11-2008 |
| | | | JP | 4391721 B2 | 24-12-2009 |
| | | | JP | 2002330584 A | 15-11-2002 |
| | | | JP | 2009118736 A | 28-05-2009 |
| | | | US | 2002163821 A1 | 07-11-2002 |
| | | | US | 2003048646 A1 | 13-03-2003 |
| | | | US | 2004100806 A1 | 27-05-2004 |
| | | | US | 2005036343 A1 | 17-02-2005 |
| | | | US | 2006002158 A1 | 05-01-2006 |
| WO 02060066 | A1 | 01-08-2002 | SE | 520159 C2 | 03-06-2003 |
| | | | SE | 0100225 A | 27-07-2002 |
| | | | US | 2005002207 A1 | 06-01-2005 |
| | | | WO | 02060066 A1 | 01-08-2002 |
| GB 2324661 | A | 28-10-1998 | CA | 2202545 A1 | 11-10-1998 |
| | | | GB | 2324661 A | 28-10-1998 |
| | | | JP | 3512540 B2 | 29-03-2004 |
| | | | JP | H09149640 A | 06-06-1997 |
| | | | US | 5847941 A | 08-12-1998 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **H.-S. CHOI.** N4137 - Design guidelines for off-line flyback converters using Fairchild Power Switch (FPS. Fairchild Semiconductor Cor, 2003

- **S. BUONOMO ; F. SAYA ; G. VITALE.** AN1889 - STC03DE170 in 3-phase auxiliary power supply. *STMicroelectronics,* 2003